# FASCICULE DE BREVET EUROPEEN

(11) **EP 2 253 208 B1**
(45) Date de publication et mention de la délivrance du brevet: **15.02.2012**
(21) Numéro de dépôt: 10305515.8
(22) Date de dépôt: 17.05.2010
(51) Int. Cl.: A01N 47/20, A01N 25/02, A01P 21/00

(54) **Formulations concentrées de CIPC dans un dialkylène glycol et leurs utilisations pour le traitement antigerminatif de bulbes ou tubercules**
Konzentrierte CIPC-Formulierungen in Dialkylenglykolen und deren Verwendung in der keimungshemmenden Behandlung von Zwiebeln oder Knollen
Concentrated CIPC formulations in a dialkylene glycol and use thereof for anti-germinating treatment of bulbs or tubers

(30) Priorité: 19.05.2009 FR 0953336
(43) Date de publication de la demande: 24.11.2010
(73) Titulaire: XEDA INTERNATIONAL, 13670 Saint-Andiol (FR)
(72) Inventeur: Sardo, Alberto, 13160 Chateaurenard (FR)
(74) Mandataire: Blot, Philippe Robert Emile

(56) Documents cités:
- WO-A1-00/32063
- DE-A1- 10 328 943

## Description

La présente invention concerne des formulations concentrées de CIPC dans un dialkylène glycol pour le traitement antigerminatif des bulbes et tubercules. Cette utilisation est particulièrement appropriée pour le traitement des tubercules de pommes de terre.

Après la récolte des pommes de terre ou autres tubercules, celles-ci sont conservées à des températures de l'ordre de 20° à 30°C pendant environ dix jours afin de durcir leur couche péridermique (ou "peau"), puis progressivement refroidies jusqu'à leur température de conservation qui est d'environ 10°C.

Pendant les premier et deuxième mois suivant leur récolte, les tubercules restent à l'état de repos et présentent peu de tendances à la germination.

Cependant, avant la fin de cette période, les tubercules doivent être traités chimiquement afin d'inhiber la germination qui serait responsable d'effets néfastes, tels qu'une perte de poids, une transformation de l'amidon en sucre et une diminution de la qualité des tubercules ainsi qu'une détérioration de leur apparence. En outre, les germes ainsi que les tissus avoisinants contiennent des taux élevés de glycoalcaloïdes toxiques qui ne sont pas détruits au cours de la cuisson.

Les procédés de traitement antigerminatif les plus utilisés mettent en oeuvre des agents chimiques tels que le chloropropham ou encore dénommé chlorpropham, CIPC ou 3-chlorophénylisopropylcarbamate. En général, le CIPC est appliqué aux tubercules stockés au moyen de techniques de thermonébulisation. Généralement, la thermonébulisation met en oeuvre l'application de CIPC au moyen d'un courant d'air chaud afin de produire un aérosol.

Selon une première pratique, la thermonébulisation est effectuée au moyen de CIPC pur. Cependant, cette technique entraîne l'application de la matière active pure, de façon non satisfaisante sur les tubercules. En effet, le CIPC a tendance à former des amas et/ou ne se répartit pas uniformément sur les tubercules.

Selon une autre pratique, le CIPC est formulé en milieu solvant. Ainsi, FR 2 563 974 décrit une composition destinée au traitement des fruits et légumes par thermonébulisation comprenant notamment de 2 à 20% en poids d'une substance active de protection et/ou de conservation, telle que entre autres le CIPC, et un glycol, par exemple le propylène glycol. Cette technique ne donne pas de résultats satisfaisants dans la mesure où les solvants utilisés présentent des points d'ébullition faibles et ont tendance à s'évaporer rapidement lors de la thermonébulisation. Par exemple, la température d'ébullition du propylène glycol est de 187°C. Or, la température de la thermonébulisation doit être au moins inférieure de 30°C à la température d'ébullition du solvant, afin d'éviter l'évaporation du solvant et la production de fumée à la place du brouillard. Or, en effectuant la thermonébulisation autour de 157°C, le brouillard obtenu est de qualité insuffisante, ce qui se traduit par une taille des particules produites lors de la thermonébulisation trop grande : l'enrobage des bulbes ou tubercules n'est pas homogène et le pouvoir de pénétration du produit dans la masse de denrée stockée est insuffisant.

Par ailleurs, la demande EP 1 694 126 décrit des solutions concentrées comprenant de 50 à 80 % en poids de CIPC par rapport au volume total de la solution dans un ou plusieurs terpènes, tel que l'eugénol et/ou huiles terpéniques. Une solution comprenant 636 g/l de CIPC et d'alcool laurique éthoxylé utilisé à titre d'émulsifiant dans l'eugénol a ainsi été obtenue. Toutefois, l'eugénol a une odeur désagréable et est un produit classé irritant, ce qui pourrait en rendre son développement et son utilisation délicate.

Ainsi, il existe un besoin de fournir d'une part des formulations de CIPC plus concentrées afin de minimiser les quantités de solvants à mettre en oeuvre, et d'autre part, des formulations comprenant un solvant dont le point d'ébullition est élevé pour éviter les inconvénients précités .

Il a maintenant été découvert, et c'est l'un des objets de la présente invention, que les dialkylène glycols, également appelés ici dialcène glycols, ont un haut pouvoir solvant du CIPC. En particulier, l'utilisation de dialkylène glycols permet d'obtenir des solutions limpides de CIPC et d'atteindre des solutions particulièrement concentrées de CIPC à température ambiante, voire des températures aussi basses que 0°C. Par conséquent, les formulations de la présente invention permettent de limiter la quantité de produit formulé et donc de solvant à utiliser, d'où un coût, une innocuité et une rapidité d'application accrues.

Selon un premier aspect, l'invention concerne une solution de CIPC dans un dialkylène glycol.

Par « dialkylène glycol», on désigne un composé de formule (I) suivante : 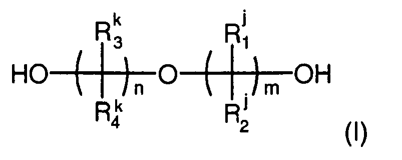 dans laquelle :
- n et m représentent indépendamment un nombre entier de 1 à 5,
- j représente un nombre entier variant de 1 à m et k représente un nombre entier variant de 1 à n,
- pour chaque valeur de j et pour chaque valeur de k, R₁^{j}, R₂^{j}, R₃^{k} et R₄^{k} identiques ou différents, représentent indépendamment un atome d'hydrogène, un hydrocarbure linéaire ou ramifié comprenant de 1 à 10 atomes de carbone, notamment un groupe alkyle linéaire ou ramifié comprenant de 1 à 10 atomes de carbone, de préférence 1 à 5 atomes de carbone. De préférence, pour chaque valeur de j et pour chaque valeur de k, R₁^{j}, R₂^{j}, R₃^{k} et R₄^{k} représentent indépendamment un atome d'hydrogène, un méthyle, un éthyle, un n-propyle ou i-propyle.

Le diéthylène glycol, le dipropylène glycol et le dibutylène glycol sont des exemples de dialkylène glycol. Selon un aspect particulier, ledit dialkylène glycol est le dipropylène glycol.

La solution peut comprendre un mélange de dialkylène glycols de formule (I).

Par « solution », on entend que le CIPC est soluble dans le dialkylène glycol. Ainsi, lors de l'application de la formulation selon l'invention sur les bulbes ou tubercules, le CIPC se répartit uniformément et ne conduit pas à la formation d'amas.

La solution précitée comprend de 350 à 900 g/L de CIPC, notamment de 550 à 850 g/L, de préférence de 600 à 700 g/L.

Le CIPC est avantageusement très soluble dans les dialkylène glycols. La solution proposée permet donc de minimiser les quantités de solvants à mettre en oeuvre par rapport aux formulations connues. Les solvants sont néfastes du fait de leur toxicité propre et/ou du danger d'utilisation qu'ils impliquent, notamment à cause de risques importants d'inflammabilité. Il est donc avantageux de minimiser les quantités de solvants utilisées. De plus, l'utilisation de solutions concentrées de CIPC permet d'augmenter la vitesse d'application de la formulation sur les bulbes ou tubercules car un volume moindre de solution est nécessaire pour parvenir à la dose active de CIPC.

D'autre part, les solutions selon l'invention sont parfaitement stables jusqu'à plusieurs mois, de préférence au moins un mois, à basse température, de préférence jusqu'à 0°C. Ceci permet donc aux utilisateurs de stocker les formulations de CIPC dans les chambres froides.

Dans un mode de réalisation, la solution peut comprendre, en outre, un ou plusieurs émulsifiants.

Selon la présente invention, on entend par "émulsifiant" tout type d'agent habituellement utilisé à cet effet, tels que les alcools gras éthoxylés, les acides gras éthoxylés, les alkylphénols éthoxylés ou tout autre produit non ionique.

Les solutions comprennent généralement de 0 à 20 % en poids, notamment de 0 à 15% en poids, de préférence de 1 à 5 % en poids d'émulsifiant.

La solution peut en outre contenir des tensioactifs variés connus en soi.

De préférence, la solution est exempte de terpènes, tel que l'eugénol et/ou huiles terpéniques.

Selon un deuxième aspect, l'invention concerne également une méthode de traitement des bulbes ou tubercules, notamment des pommes de terre, au moyen de la solution précitée. La méthode est de préférence mise en oeuvre pour le traitement antigerminatif.

La solution selon l'invention peut être appliquée sur les tubercules et bulbes en utilisant l'une quelconque des méthodes connues dans la technique, notamment par atomisation, thermonébulisation. De préférence, la solution est appliquée par thermonébulisation. Cette technique est connue en soi. Elle peut avantageusement être réalisée au moyen de l'Electrofog Xeda ou tout autre dispositif tel que décrit dans la demande FR 2 566 681.

Les températures d'ébullition des dialkylène glycols sont élevées. Il est ainsi possible de réaliser la thermonébulisation à des températures importantes et d'obtenir des brouillards de bonne qualité. Par exemple, la température d'ébullition du dipropylène glycol est de 232°C. La température adéquate de thermonébulisation est d'environ 30°C inférieure à celle de la température d'ébullition, et avoisine donc les 192°C. A cette température, un brouillard de bonne qualité est obtenu (c'est-à-dire composé de particules de faible taille et de faible distribution), ce qui permet de répartir le CIPC sur les bulbes ou tubercules de façon très homogène.

De préférence, la solution est appliquée à une température comprise entre 170 et 230°C, notamment entre 190 et 215°C.

La quantité de la solution selon l'invention devant être appliquée aux tubercules et bulbes dépend essentiellement de la méthode d'application sélectionnée. En général, on applique au total, sur une période de 6 mois, de 20 à 30 g, de préférence de 25 à 28 g de CIPC par tonne de bulbes ou tubercules traités. Plus généralement, on ajuste la quantité appliquée de principe actif en fonction de la durée de stockage.

L'application peut être continue ou intermittente au cours de la durée du stockage. De préférence, l'application est répétée dans l'enceinte de stockage tous les deux mois environ.

Selon un troisième aspect, l'invention concerne également un procédé de préparation de solutions de CIPC, comprenant l'étape consistant à solubiliser du CIPC dans un dialkylène glycol. De préférence, le dialkylène glycol est du dipropylène glycol. La solubilisation peut être effectuée sous agitation.

Selon un quatrième aspect, l'invention concerne l'utilisation de dipropylène glycol pour solubiliser le CIPC.

Les exemples suivants sont donnés à titre illustratif et non limitatif de la présente invention.

### Exemple 1

On mélange à température ambiante sous agitation 63,3 g de CIPC (commercialisé par LUXAN Holland), 2,9 g d'alcool laurique éthoxylé à 11 moles (émulsifiant) et 44,8 g de dipropylène glycol pour obtenir 100 mL de solution parfaitement limpide et stable. On répète cette opération avec des quantités de CIPC variant de 50 à 110 g dans la même quantité de dipropylène glycol et éventuellement d'émulsifiant à hauteur de 5 %. Pour 50 g de CIPC, 45 g de dipropylène glycol et 5 g de d'alcool laurique éthoxylé à 11 moles, une solution à 550 g/L de CIPC est obtenue. Pour 110 g de CIPC, 46 g de dipropylène glycol et 3 g de d'alcool laurique éthoxylé à 11 moles, une solution à 780 g/L de CIPC est obtenue. On obtient les mêmes limpidité et stabilité.

A titre comparatif, une solution de CIPC dans le propylène glycol présente une limite de solubilité à 58 % de CIPC (en poids par volume de solution).

### Exemple 2

Les solutions de l'exemple 1 sont appliquées à des pommes de terre en chambre froide à l'aide de l'Electrofog Xeda à une température de 210°C, 15 à 20 jours après la mise en stockage des pommes de terre avec une première dose de 12 ppm en CIPC puis toutes les 6 à 8 semaines avec une dose de 8 ppm en CIPC.

## Revendications

1. Solution de CIPC dans un dialkylène glycol.

2. Solution selon la revendication 1, dans laquelle le dialkylène glycol est du dipropylène glycol.

3. Solution selon la revendication 1 ou 2, comprenant de 350 à 900 g/L de CIPC.

4. Solution selon la revendication 3, comprenant de 550 à 850 g/L de CIPC.

5. Solution selon l'une quelconque des revendications précédentes, comprenant un ou plusieurs émulsifiants.

6. Solution selon l'une quelconque des revendications précédentes, comprenant de 0 à 20 % en poids d'émulsifiant.

7. Méthode de traitement des bulbes ou tubercules, au moyen de la solution selon l'une quelconque des revendications précédentes.

8. Méthode selon la revendication 7, pour le traitement antigerminatif des pommes de terre.

9. Méthode selon la revendication 7 ou 8, dans laquelle ladite solution est appliquée par thermonébulisation.

10. Méthode selon l'une quelconque des revendications 7 à 9, dans laquelle la solution est appliquée à une température comprise entre 170 et 230°C.

11. Méthode selon la revendication 10, dans laquelle la solution est appliquée à une température comprise entre 190 et 215°C.

12. Procédé de préparation de solutions de chloropropham (CIPC), comprenant l'étape consistant à solubiliser du CIPC dans un dialkylène glycol.

13. Procédé selon la revendication 12, dans lequel le dialkylène glycol est le dipropylène glycol.

## Claims

1. A solution of CIPC in a dialkylene glycol.

2. The solution according to claim 1, in which the dialkylene glycol is dipropylene glycol.

3. The solution according to claim 1 or 2, comprising 350 to 900 g/l of CIPC.

4. The solution according to claim 3, comprising 550 to 850 g/l of CIPC.

5. The solution according to anyone of the preceding claims, comprising one or more emulsifying agents.

6. The solution according to anyone of the preceding claims, comprising 0 to 20 % by weight of emulsifying agent.

7. A method for the treatment of bulbs or tubers, using the solution according to anyone of the preceding claims.

8. The method according to claim 7, for the anti-germinating treatment of potatoes.

9. The method according to claim 7 or 8, in which said solution is applied by fogging.

10. The method according to anyone of claims 7 to 9, in which the solution is applied at a temperature of between 170 and 230 °C.

11. The method according to claim 10, in which the solution is applied at a temperature of between 190 and 215 °C.

12. A process for the preparation of solutions of chloropropham (CIPC), comprising the step of solubilising CIPC in a dialkylene glycol.

13. The process according to claim 12, in which the dialkylene glycol is dipropylene glycol.

## Patentansprüche

1. CIPC-Lösung in einem Dialkylenglycol.

2. Lösung gemäß Anspruch 1, wobei das Dialkylenglycol Dipropylenglycol ist.

3. Lösung gemäß Anspruch 1 oder 2, aufweisend 350 g/l bis 900 g/l CIPC.

4. Lösung gemäß Anspruch 3, aufweisend 550 g/l bis 850 g/l CIPC.

5. Lösung gemäß irgendeinem der vorhergehenden Ansprüche, aufweisend einen oder mehr Emulgatoren.

6. Lösung gemäß irgendeinem der vorhergehenden Ansprüche, aufweisend 0 Gew.-% bis 20 Gew.-% Emulgator.

7. Verfahren zum Behandeln von Zwiebeln oder Knollen mit der Lösung gemäß irgendeinem der vorhergehenden Ansprüche.

8. Verfahren gemäß Anspruch 7 zur Antikeimbehandlung von Kartoffeln.

9. Verfahren gemäß Anspruch 7 oder 8, wobei die Lösung mittels thermischen Vernebelns aufgebracht wird.

10. Verfahren gemäß irgendeinem der Ansprüche 7 bis 9, wobei die Lösung bei einer Temperatur von zwischen einschließlich 170°C und 230°C aufgebracht wird.

11. Verfahren gemäß Anspruch 10, wobei die Lösung bei einer Temperatur von zwischen einschließlich 190°C und 215°C aufgebracht wird.

12. Verfahren zum Herstellen von Chlorpropham-Lösungen (CIPC), aufweisend den Schritt, der aus dem Löslichmachen von CIPC in einem Dialkylenglycol besteht.

13. Verfahren gemäß Anspruch 12, wobei das Dialkylenglycol Dipropylenglycol ist.
